(19) Europäisches Patentamt

European Patent Office

Office européen des brevets

(11) **EP 1 473 326 A1**

(12) **EUROPEAN PATENT APPLICATION**

(43) Date of publication:
**03.11.2004 Bulletin 2004/45**

(51) Int Cl.[7]: **C08L 95/00**

(21) Application number: **03076281.9**

(22) Date of filing: **29.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **KRATON Polymers Research B.V.**
**1031 CM Amsterdam (NL)**

(72) Inventors:
• **Korenstra, Jan**
**1031 CM Amsterdam (NL)**

• **Van Hek, Jeffrey Roy**
**1031 CM Amsterdam (NL)**

(74) Representative: **Kortekaas, Marcel C. J. A. et al**
**KRATON Polymers Research B.V.,Intellectual Property Services,**
**P.O. Box 37666**
**1030 BH Amsterdam (NL)**

(54) **Polymer modified bitumen with improved fracture toughness and asphalt pavement comprising the same**

(57)    A polymer modified bitumen (PMB) comprising a bitumen and a polymer, wherein

- the polymer is a styrene block copolymer (SBC) or mixture thereof and used in an amount of from 4 to 6 % by weight on the PMB
- the bitumen has an asphaltenes content equal to or greater than 9% by weight on the bitumen and wherein the SBC is a linear SBC, or
- the bitumen has an asphaltenes content below 9% by weight on the bitumen and wherein the SBC is a radial SBC, and
- the PMB has a fracture toughness at -25°C of greater than 200 kN/m$^{3/2}$, and an asphalt composition comprising aggregate material and the PMB of the present invention.

**Description**

<u>FIELD OF THE INVENTION</u>

The present invention relates to Polymer Modified Bitumen (PMB) that has improved fracture toughness and that may be used with aggregate material to form asphalt pavements.

<u>BACKGROUND OF THE INVENTION</u>

The performance of asphalt roads has kept amazing pace with the almost exponentially increasing traffic loading over the last decades. The number of heavy commercial vehicles in Europe has more than doubled over the last 20 years and due to more frequent and longer congestion, the slow moving traffic exerts higher stresses over longer loading times. Asphalt mix innovation and the use of Polymer Modified Bitumen (PMB) have improved the quality of the pavement to such an extent that the roads can still be designed to get a satisfactory life expectancy.

Before the era of significant use of PMB, there has been a systematic trend to reduce the binder content and/or to use harder base bitumen in asphalt mixes. This combination has certainly contributed to an increased stability of the asphalt mix, but has also brought the limits in terms of fatigue, fretting and cracking resistance much closer, particularly if one takes into account the higher rate of hardening due to field oxidation of leaner mixes. PMB offer excellent possibilities to compensate for the higher risk of these deficiencies.

The crack resistance obtained with binders containing certain polymers has been observed in practice and is sometimes taken for granted, but predictions through Fraass and Bending Beam Rheometer measurements do not necessarily distinguish these binders.

The ultimate cause of thermal cracking in pavements is beyond a significant level of debate: upon cooling thermal contraction forces will induce a stress in the pavement and when the stress exceeds the cohesive strength of the pavement, a crack will develop. The strength of the mix is a function of the cohesive strength of the binder and the adhesive performance of binder and aggregate. It is also commonly accepted that with unmodified asphalt, such a crack will develop almost exclusively in the binder. A long time ago, Heukelom demonstrated that for plain bitumen in the brittle regime, stress and strain at break correlate with binder stiffness; so there is little influence of grade on stress and strain at break except for the temperature at which the critical stiffness is reached. In that sense an old empirical test like Fraass breaking point has been adequate to assist in designing asphalt mixes to resist cracking.

In PMB the polymer not only affects the rheology, but it can also greatly enhance the cohesive strength. Therefore, contraction stress can also lead to adhesive flaws rather than only cohesive flaws.

Thermal contraction stresses will not develop linear with time: in the period of a seasonal turn, the temperature will gradually go down, but with at least daily fluctuations based on day and night time temperatures imposing stress and stress relief. Before the binder is in its brittle state, there will be hardly any damage. Once the binder is in its brittle state, the pavement seeks stress relief through other mechanisms than flow. Valkering et al have shown that micro-cracking is one such mechanism. Using acoustic emission techniques they demonstrated that before the critical fracture temperature was reached, there was a significant level of acoustic activity, which can only be attributed to the initiation of cracks.

Thermal fracture is basically always preceded by some form of thermal fatigue and that, before any catastrophic failure happens, it is likely that some level of stress relaxation has already taken place through micro-cracking.

In fracture mechanics, crack formation is divided in *crack initiation* guided by stiffness and strength and crack *propagation* guided by fracture toughness describing the resistance to crack growth. Since a tougher binder can sustain more and larger micro-cracks, much more stress relief can be obtained without catastrophic cracking of a pavement. Fracture toughness and breaking energy (derived from fracture toughness and stiffness) are therefore likely to be better indicators for low temperature behaviour than for instance Fraass breaking point or the original Superpave BBR method derived results.

The present inventors set out to prepare a PMB with improved fracture toughness, which will therefore extend the useful lifetime of the pavements. Surprisingly, they observed that certain combinations of polymer/bitumen yielded increased fracture toughness, resulting in PMB with clearly attractive properties.

<u>SUMMARY OF THE INVENTION</u>

Accordingly, there is claimed A polymer modified bitumen (PMB) comprising a bitumen and a polymer, wherein

- the polymer is a styrene block copolymer (SBC) or mixture thereof and used in an amount of from 4 to 6% by weight on the PMB
- the bitumen has an asphaltenes content equal to or greater than 9% by weight on the bitumen and wherein the SBC is a linear SBC, or

- the bitumen has an asphaltenes content below 9% by weight on the bitumen and wherein the SBC is a radial SBC, and

- the PMB has a fracture toughness at -25°C of greater than 200 kN/m$^{3/2}$.

DETAILED DESCRIPTION OF THE INVENTION

Styrenic block copolymers are known. KRATON Polymers is a major producer of various SBC based on the formulae

$$A\text{-}B\text{-}A, (A\text{-}B)n, A\text{-}(B\text{-}A)n \text{ (linear SBC's)}$$

$$(A\text{-}B) \ mX, ([A\text{-}B] \ n) \ mX, ([A\text{-}B\text{-}A]) \ mX, (A\text{-}B) \ kX \ (B) \ 1$$

(radial SBC's), wherein A represents a hard block having a glass transition temperature of greater than 25°C, typically a polystyrene block; B represents an elastomer block having a glass transition temperature below -25°C, typically a poly(conjugated diene) block, n is an integer greater than 1, X is the residue of a coupling agent or multifunctional monomer and m, k and 1 are integers wherein m and the combination of k and 1 are greater than 2

Such SBCs typically have an apparent molecular weight in the range of from 100,000 to 500,000. These SBC's may comprise diblock copolymers of formula A-B in various amounts. Moreover, the SBSs may be fully hydrogenated or only comprise one or more (partially) hydrogenated elastomer block.

With the term "apparent molecular weight", as used throughout the present specification, is meant the molecular weight, as measured by means of gel chromatography (GPC), relative to poly(styrene) calibration standards (according to ASTM 3536).

Typical examples of a linear SBC include KRATON® D1101, a poly(styrene-butadiene-styrene) block copolymer available for more then 40 years and the more recent KRATON® D1192. A typical example of a radial SBC is KRATON® D1116, a polymer having about 4 arms attached to the residue of the coupling agent.

Bitumen is also known. It should be noted that both compatible bitumen, i.e., having an asphaltenes content below 9% by weight on the bitumen, as well as incompatible bitumen having an asphaltenes content of 9% by weight or greater may be used, albeit with different SBC's. Indeed, the asphaltenes content is only one of the components of a bitumen that effect the compatibility of the bitumen, albeit the most influential one. It should therefore be realised that certain compatible bitumen exist having an asphaltenes content of greater than 9% and likewise certain incompatible bitumen exist having an asphaltenes content of less than 9% by weight. The bitumen present in the PMB according to the present invention may be naturally occurring bitumen or derived from a mineral oil. Also petroleum pitches obtained by a cracking process and coal tar can be used as the bituminous component as well as blends of various bituminous materials. Examples of suitable components include distillation or "straight-run bitumen", precipitation bitumen, e.g. propane bitumen, blown bitumen, amongst others catalytically blown bitumen, and mixtures thereof. Other suitable bituminous components include mixtures of one or more of these bitumen with extenders (fluxes) such as petroleum extracts, e.g. aromatic extracts, distillates or residues, or with oils. Suitable bituminous components (either "straight-run bitumen" or "fluxed bitumen") are those having a penetration of in the range of from 30 to 250 dmm at 25°C; bitumen in the range of from 50 to 100 dmm will be the most convenient to use in hot mix asphalt systems, whereas bitumen having a pen in the range of from 100 to 200 dmm will be most convenient to use for modified emulsions that are applied in road construction by way of e.g., surface dressing techniques.

The PMB of the present invention may also, optionally, contain other ingredients such as oils and stabilisers. The envisaged use of the PMB is in asphalt compositions as binder, typically in an amount of from 4 to 7 parts per hundred parts by weight of the aggregate ("pha"), the remainder being formed by aggregates such as stone chippings, sand and such like material.

Waxes may be used in the PMB according to the composition, but are not preferred. Although it is known that the presence of a wax will help to reduce the mixing and application temperature of the PMB, its presence -in particular when it replaces the SBC- eliminates the increased resistance to crack propagation achieved by the present invention.

Fracture toughness indeed shows correlation with asphalt mix performance at low temperatures. The concept of this fundamental material property for asphalt binders will be explained below.

Measuring fracture toughness and breaking energy

Fracture toughness ($K_{ic}$) and fracture energy ($G_{ic}$) of binders are determined in three-point bending testing of notched beams.

The dimensions of the beams are: 25 x 12.5 x 175 mm: sharp, 5 mm deep, 90° starter notch and a span of 100mm, hence a support-span-to-depth ratio of 4:1. This method is derived from ASTM E 399 that determines the fracture toughness of metals and has been used before for asphalt binders [6]. The INSTRON™ cross-head speed (i. e. the rate of loading the sample) is set at 0.01 mm/s. This leads to an approximate rate of strain in the area just above the notch, which is slightly higher than 3% per minute. The latter is the rate normally used in the SHRP Superpave direct tension experiments.

Fracture toughness is determined from the dimensions and the failure load according to the following relationship:

$$K_{Ic} = \frac{P_f S}{bW^{3/2}} \left[ \frac{3\left(\frac{a}{W}\right)^{1/2} \left[1.99 - \frac{a}{W}\left(1 - \frac{a}{W}\right)\left(2.15 - 3.93\left(\frac{a}{W}\right) + 2.7\left(\frac{a}{W}\right)^2\right)\right]}{2\left(1 + 2\frac{a}{W}\right)\left(1 - \frac{a}{W}\right)^{3/2}} \right]$$

where: $K_{ic}$ = fracture toughness or critical stress intensity factor, N/m$^{3/2}$

$P_f$ = failure load, N
S = span between supports, 100 mm
a = notch depth, 5 mm
W = beam depth, 25 mm
B = specimen width, 12.5 mm

**Figure 1: Fracture Test on Notched Bitumen Samples**

25 mm          12.5 mm

100 mm

Force displacement data were used to calculate a stiffness modulus assuming the beam to be without a notch, using the following formula:

$$E = (S^3 / 4BW^3) \cdot (\Delta P / \Delta d)$$

in which:

$\Delta P$ = the load increment, N

$$\Delta d = \text{the cross-head displacement increment, mm}$$

Using the stiffness modulus and the fracture toughness, the fracture energy can be calculated. Poisson's ratio needed in the calculation of the fracture energy was assumed to be equal to 0.5 (as for purely elastic materials):

$$G_{ic} = 0.75\, K_{IC}^2\, /\, E$$

The PMB according to the present invention show a clear improvement in respect of fracture toughness making them extremely suitable for outdoor applications such as pavements. Other applications in which the PMB may be of use are in sound deadening, in adhesive, sealant or coating compositions and/or in vibration dampening compositions.
The following Examples illustrate the present invention, however without restricting its scope to these specific embodiments.

Experimental

The following bitumen and polymers have been tested:

- Bitumen (A) is a compatible bitumen, having an asphalthenes content of 6.8% on the bitumen and a pen value of 100 dmm;
- Bitumen (B) is an incompatible bitumen, having an asphalthenes content of 17.4% on the bitumen and a pen value of 80 dmm;
- Polymer 1 is a radial SBS having a molecular weight of about 320,000; and
- Polymer 2 is a linear SBS having a molecular weight of about 140,000.

Example 1

Compositions were made with Bitumen (A) and Polymer 1 at an SBC content of 0% (base bitumen, comparative); 2% (comparative) and 5%.
Whereas at -25°C the base bitumen and the 2% PMB had a Fracture Toughness of about 90 kN/m$^{3/2}$, the 5% PMB had a Fracture Toughness of about 270 kN/m$^{3/2}$.

Example 2

Compositions were made with Bitumen (B) and Polymer 2 at an SBC content of 0% (base bitumen, comparative); 2% (comparative) and 5%.
Whereas at -25°C the base bitumen and the 2% PMB had a Fracture Toughness of about 101, respectively 108 kN/m$^{3/2}$, the 5% PMB had a Fracture Toughness of about 244 kN/m$^{3/2}$.

Comparative Example 1

Compositions were made with Bitumen (B) and Polymer 1 at an SBC content of 2% and 5%.
The 2% PMB had a Fracture Toughness of about 96 kN/m$^{3/2}$, the 5% PMB had a Fracture Toughness of about 132 kN/m$^{3/2}$.

Comparative Example 2

Compositions were made with Bitumen (A) and Polymer 2 at an SBC content of 2% and 5%.
The 2% PMB again had a Fracture Toughness of about 87 kN/m$^{3/2}$, the 5% PMB had a Fracture Toughness of about 114

$$kN/m^{3/2}.$$

Conclusion

Fracture toughness is a material characteristic that is conveniently used to describe the resistance to cracking in many engineering products. Evaluations on various PMB show that particularly attractive results in terms of fracture toughness may be had by selecting a specific amount of SBC (in the range of 4-6 %wt, preferably about 5 %wt), and the proper bitumen/SBC combination.

## Claims

1. A polymer modified bitumen (PMB) comprising a bitumen and a polymer, wherein

   - the polymer is a styrene block copolymer (SBC) or mixture thereof and used in an amount of from 4 to 6 % by weight on the PMB
   - the bitumen has an asphaltenes content equal to or greater than 9% by weight on the bitumen and wherein the SBC is a linear SBC, or
   - the bitumen has an asphaltenes content below 9% by weight on the bitumen and wherein the SBC is a radial SBC, and
   - the PMB has a fracture toughness at -25°C of greater than 200 kN/m$^{3/2}$.

2. A PMB as claimed in claim 1, wherein the SBC is of the general formulae

$$A\text{-}B\text{-}A, (A\text{-}B)n, A\text{-}(B\text{-}A)n$$

   (linear SBC's)

$$(A\text{-}B)\, mX, ([A\text{-}B]n)mX, (\,[A\text{-}B\text{-}A]\,)\, mX, (A\text{-}B)\, kX\, (B)\, 1$$

   (radial SBC's), wherein A represents a hard block having a glass transition temperature of greater than 25°C, typically a polystyrene block; B represents an elastomer block having a glass transition temperature below -25°C, typically a poly(conjugated diene) block, n is an integer greater than 1, X is the residue of a coupling agent or multifunctional monomer and m, k and 1 are integers wherein m and the combination of k and 1 are greater than 2.

3. A PMB as claimed in claim 1 or 2, wherein the bitumen has a PEN value of from 30 to 250 dmm.

4. An asphalt composition comprising aggregate material and from 4 to 7 parts per hundred parts by weight of aggregate of the PMB as claimed in any one of claims 1 to 3.

European Patent Office

**EUROPEAN SEARCH REPORT**

Application Number

EP 03 07 6281

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KWANG W. KIM ET AL: "Fracture toughness of polymer-modified asphalt concrete at low temperatures" CANADIAN JOURNAL OF CIVIL ENGINEERING, [Online] vol. 30, no. 2, 25 March 2003 (2003-03-25), pages 406-413, XP009018102 Retrieved from the Internet: <URL:http://cjce.nrc.ca> [retrieved on 2003-09-24] * page 409, left-hand column, last paragraph - page 413, left-hand column, paragraph 1; figures 8-10; table 3 * --- | 1-4 | C08L95/00 |
| X | BECKER Y ET AL: "Polymer Modified Asphalt" VISION TECNOLOGICA, INTEVEP, LOS TEQUES, VE, vol. 9, no. 1, 2001, pages 39-50, XP002206873 ISSN: 1315-0855 * page 44, left-hand column, last paragraph - page 48, left-hand column, paragraph 1; figures 4,5; table 1 * --- | 1-4 | |
| X | ZANZOTTO L ET AL: "THERMOMECHANICAL PROPERTIES OF SEVERAL POLYMER MODIFIED ASPHALTS" APPLIED RHEOLOGY, APPLIED RHEOLOGY, EDITORIAL OFFICE, ZURICH, CH, vol. 10, no. 4, July 2000 (2000-07), pages 185-191, XP000976532 * page 3, left-hand column, paragraph 2 - page 3, right-hand column, paragraph 2 * * page 5, right-hand column, paragraph 2 - page 7, left-hand column, paragraph 1; figures 2-10 * --- -/-- | 1-4 | TECHNICAL FIELDS SEARCHED (Int.Cl.7) C08L |

The present search report has been drawn up for all claims

| Place of search | Date of completion of the search | Examiner |
|---|---|---|
| MUNICH | 29 September 2003 | Otegui Rebollo, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 03 07 6281

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 294 935 A (SHELL INT RESEARCH) 15 May 1996 (1996-05-15) * page 1, line 1-7 * * page 3, line 15 - page 4, line 3 * * page 6, line 26 - page 7, line 3 * * page 10, line 4-25 * * page 11, line 3-6; claims 1,8,9 * --- | 1-4 | |
| X | GB 2 257 708 A (SHELL INT RESEARCH) 20 January 1993 (1993-01-20) * page 1, line 1-4 * * page 5, line 4 - page 7, line 25; claims; examples * ----- | 1-4 | |

TECHNICAL FIELDS SEARCHED (Int.Cl.7)

The present search report has been drawn up for all claims

| Place of search | Date of completion of the search | Examiner |
|---|---|---|
| MUNICH | 29 September 2003 | Otegui Rebollo, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 473 326 A1**

**ANNEX TO THE EUROPEAN SEARCH REPORT
ON EUROPEAN PATENT APPLICATION NO.**                    EP 03 07 6281

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2003

| Patent document cited in search report | | Publication date | Patent family member(s) | | Publication date |
|---|---|---|---|---|---|
| GB 2294935 | A | 15-05-1996 | US | H1580 H | 06-08-1996 |
| GB 2257708 | A | 20-01-1993 | US | 5118733 A | 02-06-1992 |

For more details about this annex : see Official Journal of the European Patent Office, No. 12/82

9